# EUROPÄISCHE PATENTSCHRIFT

(11) **EP 1 832 802 B1**
(45) Veröffentlichungstag und Bekanntmachung des Hinweises auf die Patenterteilung: **02.12.2009**
(21) Anmeldenummer: 07001587.0
(22) Anmeldetag: 25.01.2007
(51) Int. Cl.: F16M 13/02, B25B 5/10

(54) **Trägerklammer**
Bracket clip
Pince d'encrage

(30) Priorität: 06.03.2006 DE 102006010564
(43) Veröffentlichungstag der Anmeldung: 12.09.2007
(73) Patentinhaber: Sikla GmbH, 78056 Schwenningen (DE)
(72) Erfinder: Kober, Edgar, 45888 Gelsenkirchen (DE)
(74) Vertreter: Lenzing, Andreas

(56) Entgegenhaltungen:
- EP-A- 0 894 983
- WO-A-2007/059110
- CA-A1- 2 487 292
- DE-U1- 29 619 144
- US-A1- 2005 230 582
- US-B1- 6 948 877

## Beschreibung

Die vorliegende Erfindung betrifft eine Trägerklammer nach dem Oberbegriff des Anspruchs 1, die aus dem Dokument US 2005/0230582 A bekannt ist.

Um eine einfache und schnelle Befestigung von Objekten an Stahlträgern zu ermöglichen, insbesondere zur Anhängung von Lampen, Sprinkleranlagen oder ähnlichem, sind aus dem Stand der Technik Trägerklammern zur klemmenden Festlegung an plattenförmigen Fortsätzen der Stahlträger bekannt. Insbesondere für große Belastungen werden solche Trägerklammern als Gussteile hergestellt.

Es ist die Aufgabe der vorliegenden Erfindung, eine Trägerklammer anzugeben, bei der die Montage vereinfacht und die Sicherheit der Halterung verbessert ist.

Diese Aufgabe wird für eine eingangs genannte Trägerklammer erfindungsgemäß mit den Merkmalen des Anspruchs 1 gelöst.

Die Profilierung umfasst zwei Klemmkanten, die parallel zueinander in einer Längsrichtung des Klemmfortsatzes angeordnet sind. Durch diese Anordnung wird eine optimale Verteilung der Andruckkräfte über die beiden parallelen Klemmkanten und den im wesentlichen punktförmigen Andruckbereich der Klemmschraube erzielt. Um bei gegebener Baugröße der Trägerklammer eine besonders gute Abstützung gegen ein anliegendes Drehmoment zu erzielen ist bevorzugt vorgesehen, dass eine äußere Begrenzung der Klemmkanten in einer Querrichtung des Klemmfortsatzes im wesentlichen mit äußeren Seitenwänden des Klemmfortsatzes zusammenfällt.

Weitere Vorteile und Merkmale ergeben sich aus dem nachfolgend beschriebenen Ausführungsbeispiel sowie aus den abhängigen Ansprüchen.

Nachfolgend wird ein bevorzugtes Ausführungsbeispiel einer Trägerklammer beschrieben und anhand der anliegenden Zeichnungen näher erläutert.
- Fig. 1: zeigt eine Schnittansicht durch eine Symmetrieebene einer erfindungsgemäßen Trägerklammer.
- Fig.2: zeigt eine Draufsicht auf die Trägerklammer aus Fig. 1. von oben.
- Fig. 3: zeigt eine Draufsicht auf die Trägerklammer aus Fig. 1 in der Richtung A.
- Fig. 4:: zeigt eine Draufsicht auf die Trägerklammer aus Fig. 1 aus der Richtung B.

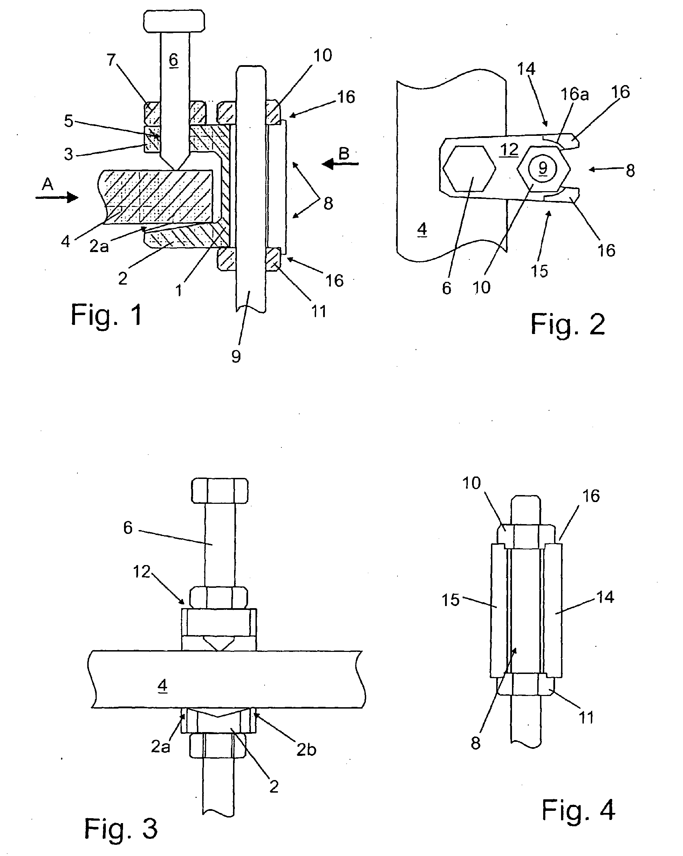

Die erfindungsgemäße Trägerklammer umfasst einen Grundkörper 1, der als einstückiges Gussteil aus weißem Temperguss hergestellt ist. Der Grundkörper 1 hat einen Klemmfortsatz 2, der sich in einer Längsrichtung der Trägerklammer, die in Fig. 1 der Waagerechten in der Zeichnungsebene entspricht, erstreckt. Parallel zu dem Klemmfortsatz 2 erstreckt sich ein Haltearm 3, so dass von Haltearm 3, Klemmfortsatz 2 und restlichem Grundkörper 1 eine im wesentlichen U-förmige Öffnung gebildet wird. In diese Öffnung ist ein plattenförmiger Fortsatz eines Stahlträgers 4 eingeschoben.

Der Haltearm 3 weist eine Gewindebohrung 5 auf, die den Haltearm senkrecht zu der Ebene des Plattenteils 4 vollständig durchgreift. In das Gewinde ist eine im wesentlichen spitz zulaufende Klemmschraube 6 eingedreht, wobei die Klemmschraube 6 mittels einer auf ihr aufgeschraubten und gegen den Haltearm 5 spannbaren Kontermutter 7 gesichert werden kann. Durch Anziehen der Klemmschraube 6 wird der Stahlträger 4 gegen den Klemmfortsatz 2 gepresst und insgesamt zwischen Klemmschraube 6 und Klemmfortsatz 2 klemmend gehalten.

Senkrecht zu dem Plattenteil 4 des Stahlträgers hat der Grundkörper 1 eine Ausnehmung 8, die zu der dem Klemmfortsatz 2 und Haltearm 5 entgegengesetzten Seite offen ist. Diese Öffnung durchläuft den Grundkörper 1 über seine gesamte Höhe (siehe Fig. 4), so dass ein stabförmiges Objekt 9 in bezüglich des stabförmigen Objekts radialer Richtung in die Öffnung 8 eingeführt werden kann. Dies ist eine Vereinfachung gegenüber den bekanten Bohrungen, in die ein stabförmiges Objekt axial eingeschoben werden muss.

Bei dem stabförmigen Objekt 9 handelt es sich vorliegend um eine Gewindestange. Auf der Gewindestange sind zwei als Muttern ausgebildete Anschlagmittel 10, 11 aufgeschraubt, die gegen jeweils eine von zwei gegenüberliegenden Stirnseiten 12, 13 des Grundkörpers 1 spannbar sind. Wie die Draufsicht auf die Stirnseite 12 in Fig. 2 zeigt, wird die durchgehende Ausnehmung 8 des Grundkörpers durch zwei Schenkel 14, 15 gebildet. Die Innenseiten Schenkel 14, 15 sind dabei so zueinander geneigt, dass die Ausnehmung 8 sich in Richtung ihrer Öffnung leicht konisch erweitert.

Jeder der Schenkel 14, 15 weist auf jeder der Stirnseiten 12, 13 in seinem vorderen Endbereich eine Abstufung 16 auf. Die Abstufung 16 erhebt sich nur um einen Bruchteil einer Höhe der Spannmuttern 10, 11 über die Stirnflächen 12, 13. Die Wandungen 16a der Abstufungen 16, die jeweils den Spannmuttern 10, 11 zugewandt sind, haben einen im wesentlichen teilkreisförmigen Verlauf (s. Fig. 2). Insgesamt ist hierdurch erreicht, dass zum einen die angezogenen oder eingehängten und schwerkraftbelasteten Muttern 10, 11 bzw. das Haltemittel 9 nicht mehr aus der Öffnung 8 herausrutschen können. Dies vereinfacht die Montage wesentlich, da eine Sicherung des Haltemittels 9 bereits vorliegt, bevor die Spannmuttern 10, 11 vollständig angezogen sind. Zugleich sorgt der bogenförmige Verlauf der Wandung 16a dafür, dass die Muttern 10, 11 mit einem üblichen Werkzeug bedienbar sind und nicht verkanten können. Hierdurch kann auch, wie in den Figuren gezeigt ist, auf Unterlegscheiben verzichtet werden. Falls dennoch Unterlegscheiben eingesetzt werden, so können die gebogenen Wandungen 16a zweckmäßig einer genauen Positionierung der Unterlegscheiben und somit des Haltemittels 9 dienen.

Wie die Darstellung aus Fig. 3 zeigt, weist der Klemmfortsatz 2 auf der Seite seiner Anlage gegen das Plattenteil 4 ein im wesentlichen V-förmiges Profil auf. Hierdurch werden zwei Klemmkanten 2a, 2b ausgebildet, die als einzige Berührflächen bzw. idealisiert Berührlinien an das Plattenteil 4 angedrückt sind. Durch die Kerbwirkung der Klemmkanten 2a, 2b wird eine erheblich bessere und drehfestere Klemmung des Klemmfortsatzes 2 an der oft unebenen und rauen Stahloberfläche des Stahlträgers 4 erzielt. Um eine besonders gute Abstützung gegen angreifende Drehmomente um die Achse der spitz zulaufenden Klemmschraube 6 zu erzielen sind die Klemmkanten 2a, 2b durch die Wahl des V-förmigen Querschnitts des Klemmfortsatzes 2 an den in Querrichtung gemäß Fig. 3 äußeren Rändern des Klemmfortsatzes 2 angeordnet.

## Patentansprüche

1. Trägerklammer, umfassend einen in einem Stück ausgebildeten Grundkörper (1) mit einem Klemmfortsatz (2) und einem zu dem Klemmfortsatz beabstandeten Haltearm (3) mit einem Gewindeloch (5), eine in dem Gewindeloch (5) aufgenommene Klemmschraube (6), wobei ein plattenförmiger Teil (4) insbesondere eines Stahlträgers zwischen Klemmfortsatz (2) und Klemmschraube (6) klemmend fixierbar ist, und eine Ausnehmung (8) des Grundkörpers zur Befestigung eines Objekts (9) an der Trägerklammer, wobei der Klemmfortsatz (2) im Bereich seiner Anlage an den plattenförmigen Teil (4) eine nicht plane Profilierung aufweist, **dadurch gekennzeichnet, dass** die Profilierung zwei Klemmkanten (2a, 2b) umfasst, die parallel zueinander in einer Längsrichtung des Klemmfortsatzes angeordnet sind.

2. Trägerklammer nach Anspruch 1, **dadurch gekennzeichnet, dass** eine äußere Begrenzung der Klemmkanten (2a, 2b) in einer Querrichtung des Klemmfortsatzes (2) im Wesentlichen mit äußeren Seitenwänden des Klemmfortsatzes (2) zusammenfallen.

3. Trägerklammer nach einem der Ansprüche 1, 2 **dadurch gekennzeichnet, dass** die Ausnehmung (8) an einer Seite eine Öffnung zur radialen Einführung eines stabförmigen Objekts (9) in die Ausnehmung (8) aufweist.

4. Trägerklammer nach Anspruch 3, **dadurch gekennzeichnet, dass** die Ausnehmung sich auf ihre Öffnung zu konisch erweitert.

5. Trägerklammer nach Anspruch 3,4, **dadurch gekennzeichnet, dass** die Ausnehmung (8) in einer Stirnseite (12, 13) des Grundkörpers (1) mündet wobei die Stirnseite eine Abstufung (16) zur formschlüssigen Halterung eines an dem stabförmigen Objekt angebrachten Anschlagsteil (10, 11) aufweist.

6. Trägerklammer nach einem der Ansprüche 3 -5, **dadurch gekennzeichnet, dass** eine dem Anschlagmittel (10, 11) gegenüber liegende Wand (16a) der Abstufung (16) einen gekrümmten, insbesondere teilkreisförmigen Verlauf aufweist.

7. Trägerklammer nach Anspruch 6, **dadurch gekennzeichnet, dass** eine Höhe der Abstufung (16) kleiner ist, als eine Höhe des Anschlagmittels (16),wobei das Anschlagmittel insbesondere eine Standardmutter für eine der Größe der Ausnehmung (8) entsprechende Gewindeschraube (9) ist.

8. Trägerklammer nach einem der vorhergehenden Ansprüche, **dadurch gekennzeichnet, dass** der Grundkörper (1) als Gussteil ausgebildet ist.

9. Trägerklammer nach Anspruch 8 **dadurch gekennzeichnet, dass** der Grundkörper (1) aus Temperguss insbesondere weißem Temperguss besteht.

## Claims

1. Supporting clip comprising a base (1) formed in one piece with a clamping extension (2) and a holding arm (3), which is distanced from the clamping extension, with a threaded hole (5), a clamping screw (6) held in the threaded hole (5), wherein a plate-shaped part (4) in particular a steel beam can be fixed in a clamping manner between clamping extension (2) and clamping screw (6), and a recess (8) of the base for attaching an object (9) to the supporting clip, wherein the clamping extension (2) at its point of contact with the plate-shaped part (4) has a non-flat contouring, **characterized in that** the contouring comprises two clamping edges (2a, 2b), which are arranged parallel to one another in the longitudinal direction of the clamping extension.

2. Supporting clip according to Claim 1, **characterized in that** an outer boundary of the clamping edges (2a, 2b), in a transverse direction of the clamping extension (2), substantially coincides with outer side walls of the clamping extension (2).

3. Supporting clip according to either of Claims 1 and 2, **characterized in that** the recess (8) has an opening on one side to radially guide a rod-shaped object (9) into the recess (8).

4. Supporting clip according to Claim 3, **characterized in that** the recess widens conically towards its opening.

5. Supporting clip according to Claim 3, 4, **characterized in that** the recess (8) opens out in a front (12, 13) of the base (1), wherein the front has a graduation (16) to positively mount a stop part (10, 11) fixed to the rod-shaped object.

6. Supporting clip according to any one of Claims 3 - 5, **characterized in that** a wall (16a), lying opposite the stop means (10, 11), of the graduation (16) has a curved, especially part-circular shape.

7. Supporting clip according to Claim 6, **characterized in that** the height of the graduation (16) is lower than the height of the stop means (16), wherein in particular, the stop means is a standard nut for a threaded screw (9) corresponding to the size of the recess (8).

8. Supporting clip according to any one of the preceding claims, **characterized in that** the base (1) is in the form of a casting.

9. Supporting clip according to Claim 8, **characterized in that** the base (1) is made of malleable cast iron, more particularly white malleable cast iron.

## Revendications

1. Pince-support comprenant un corps de base (1) réalisé d'une seule pièce avec un prolongement de serrage (2) et un bras de maintien (3), écarté du prolongement de serrage, avec un trou taraudé (5), une vis de serrage (6) reçue dans le trou taraudé (5), dans laquelle une partie (4) en forme de plaque, en particulier d'un support en acier, est susceptible d'être fixée par serrage entre le prolongement de serrage (2) et la vis de serrage (6), et un évidement (8) du corps de base destiné à la fixation d'un objet (9) sur la pince-support, dans laquelle le prolongement de serrage (2) comporte, dans la région de son contact avec la partie (4) en forme de plaque, un profilage non plat, **caractérisée en ce que** le profilage comprend deux arêtes de serrage (2a, 2b), qui sont agencées parallèlement l'une à l'autre dans une direction longitudinale du prolongement de serrage.

2. Pince-support selon la revendication 1, **caractérisée en ce qu'**une délimitation extérieure des arêtes de serrage (2a, 2b) coïncide, dans une direction transversale du prolongement de serrage (2), sensiblement avec des parois latérales extérieures du prolongement de serrage (2).

3. Pince-support selon l'une des revendications 1 ou 2, **caractérisée en ce que** l'évidement (8) comporte sur un côté une ouverture pour l'introduction radiale d'un objet (9) en forme de barreau dans l'évidement (8).

4. Pince-support selon la revendication 3, **caractérisée en ce que** l'évidement s'élargit de façon conique en direction de son ouverture.

5. Pince-support selon la revendication 3 ou 4, **caractérisée en ce que** l'évidement (8) débouche dans une face frontale (12, 13) du corps de base (1), ladite face frontale comportant un gradin (16) pour le maintien par coopération de formes d'une pièce de butée (10, 11) montée sur l'objet en forme de barreau.

6. Pince-support selon l'une des revendications 3 à 5, **caractérisée en ce qu'**une paroi (16a) du gradin (16), opposée à la pièce de butée (10, 11), présente un tracé incurvé, en particulier un tracé en forme de cercle partiel.

7. Pince-support selon la revendication 6, **caractérisée en ce qu'**une hauteur du gradin (16) est inférieure à une hauteur de la pièce de butée (16), ladite pièce de butée étant en particulier un écrou standard pour une vis (9) correspondant à la taille de l'évidement (8).

8. Pince-support selon l'une des revendications précédentes, **caractérisée en ce que** le corps de base (1) est réalisé comme une pièce de fonderie.

9. Pince-support selon la revendication 8, **caractérisée en ce que** le corps de base (1) est constitué en fonte douce, en particulier en fonte douce blanche.
